(19) Europäisches Patentamt
European Patent Office
Office européen des brevets

(11) **EP 2 014 489 A2**

(12) **EUROPEAN PATENT APPLICATION**

(43) Date of publication:
**14.01.2009 Bulletin 2009/03**

(51) Int Cl.:
***B60C 23/04*** *(2006.01)*

(21) Application number: **08157714.0**

(22) Date of filing: **06.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.07.2007 IT MI20071362**

(71) Applicant: **Bridgeport S.R.L.**
**24036 Ponte San Pietro (BG) (IT)**

(72) Inventor: **Leo, Leonardo Claudio**
**24036, Ponte San Pietro (Bergamo) (IT)**

(74) Representative: **Petruzziello, Aldo et al**
**Racheli & C. S.p.A.**
**Viale San Michele del Carso, 4**
**20144 Milano (IT)**

(54) **Vehicle tyre condition monitoring system with tyre position self-location**

(57)    A vehicle tyre condition monitoring system comprises: a sensor unit (1A, 1B, 1C, 1D) mounted in each tyre of the vehicle and adapted to measure values of parameters which are indicative of the condition of the tyre, a transmitter (Tx) associated with each sensor unit to transmit signals which are indicative of the parameters measured by the respective sensor unit, a receiver unit (2) comprising a receiver (Rx) adapted to receive the signals transmitted by said transmitters (Tx) and a Doppler radiogoniometer (3) adapted to find the direction of the transmitter (Tx) which transmits the signal and thus the position in the vehicle of the tyre in which the transmitter transmitting the signal is mounted, processing means (5) adapted to process the signals received by the receiver (2) and display means (6) adapted to display the values of the tyre parameters and the related tyre position.

FIG . 1

## Description

The present invention refers to the field of the vehicles travelling on tyres and in particular to a device and to a method for monitoring some parameters - such as, for example, the pressure and the temperature - which are indicative of the state of the tyres of the vehicle and for automatically identify the correct position of the tyres.

Systems for monitoring the pressure of the tyres of a vehicle, commonly known by the name TPMS (Tyre Pressure Monitoring System) are known commercially.

The TPMS of the prior art have pressure and temperature sensors disposed in the valve of each tyre. The sensors of each valve are provided with a radio transmitter linked to a respective receiving or receiving-transmitting antenna disposed in the vehicle chassis, near the respective tyre, for example under the mudguard. Therefore, in the case of a vehicle with four wheels, four antennae will be provided, one for each wheel.

The antennae are connected, in a wired or wireless fashion, to an on-board computer. The on-board computer decodes the signals indicating the pressure and the temperature of the tyres coming from the antennae and accordingly displays the tyre temperature and pressure values on a display situated on the vehicle dashboard. The computer identifies the position of the wheel being monitored according to the antenna that is sending the signal and possibly signals a warning when the detected values fall outside a pre-set threshold range.

In this way, the driver has an immediate indication of the tyre that does not respect the correct running values and can intervene promptly on said tyre.

This TPMS system proves somewhat complex and costly. In fact a number of antennae equal to the number of wheels of the vehicle must be provided and the positioning of these antennae in the chassis of the vehicle near the wheels is quite complex.

The transmission between the tyre sensors and the antennae is generally carried out with a low frequency modulation, whereas the wireless transmission between the antennae and the on-board computer is done with a radio frequency modulation. This leads to a certain complexity in the provision of different modulation and demodulation devices.

Furthermore, any wired connection between the antennae and the on-board computer leads to difficulties in wiring and in passing the wires in the vehicle.

Object of the present invention is to overcome the drawbacks of the prior art by providing a vehicle tyre condition monitoring system that is able to locate automatically the position of the tyres in a precise and efficient fashion.

Another object of the present invention is to provide such a vehicle tyre condition monitoring system with self-location of the position of the tyres that is practical, easy to mount, cheap and simple to realise.

These objects are achieved, in accordance to the invention, with the system and with the method whose characteristics are listed in appended independent claims 1 and 9.

Advantageous embodiments of the invention are apparent from the dependent claims.

The vehicle tyre condition monitoring system according to the invention comprises:

- a sensor unit mounted in each tyre of the vehicle and adapted to measure values of parameters indicating the condition of the tyre,
- a transmitter associated with each sensor unit to transmit signals indicating the parameters measured by the respective sensor unit,
- a receiver unit comprising a receiver adapted to receive the signals transmitted by said transmitters of the sensor units and an automatic direction detecting device or Doppler radiogoniometer adapted to find the direction of the transmitter transmitting the signal and thus the position in the vehicle of the tyre in which the transmitter transmitting the signal is mounted,
- processing means adapted to process the signals received by the receiver, and
- display means adapted to display the values of the tyre parameters measured by the sensor units and the relative position of the tyres.

The advantages of the monitoring system according to the invention are obvious in that through the use of a precise and inexpensive device such as the Doppler radiogoniometer, it makes it possible to eliminate the different receiving antennae linked to the sensor transmitters and the complex wiring, modulation and demodulation systems used in the prior art to detect the position in the vehicle of the tyres.

Further characteristics of the invention will be made clearer by the detailed description that follows, referring to a purely exemplifying and therefore non limiting embodiment thereof illustrated in the appended figures, wherein:

Figure 1 is a diagrammatic top plan view illustrating a motor vehicle provided with the tyre condition monitoring system according to the invention;

Figure 2 is a block diagram illustrating a Doppler radiogoniometer used in the monitoring system according to the invention;

Figure 3 is a diagram illustrating the operation of the Doppler radiogoniometer of Figure 2;
Figure 4a is a diagram illustrating the frequency change of the signal detected by the radiogoniometer of Figure 2;
Figure 4b is a diagram illustrating the phase change of the signal detected by the radiogoniometer of Figure 2; and
Figure 5 is a diagram illustrating the operation of the monitoring system according to the invention.

The tyre condition monitoring system according to the invention is described with the aid of the figures.

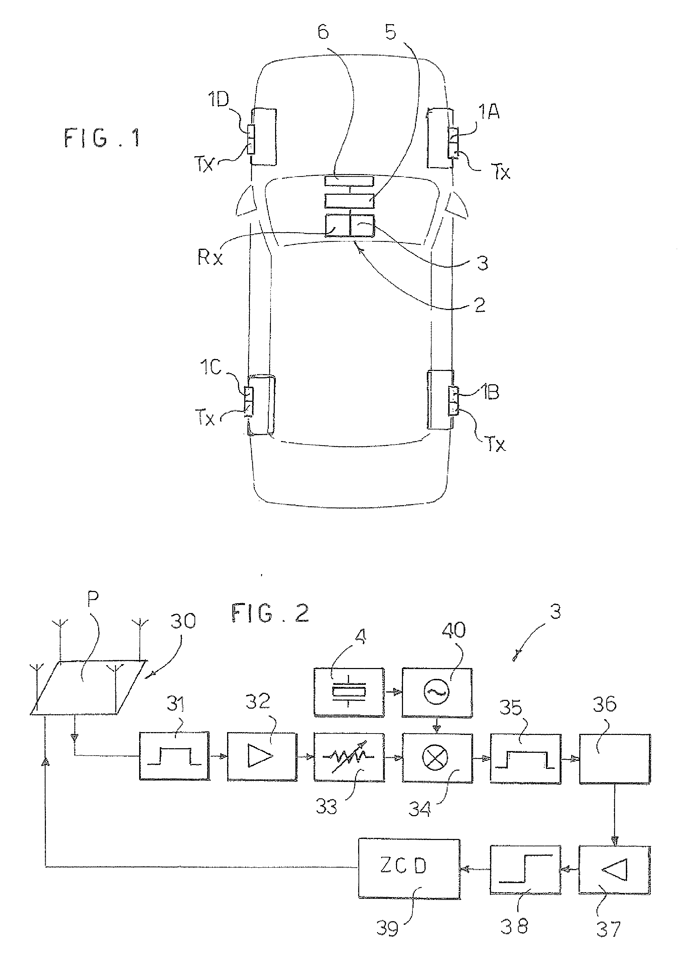

With reference for now to Figure 1 a motor vehicle provided with four tyres is shown. A sensor unit (1A, 1B, 1C, 1D) adapted to measure parameters indicating the condition of the tyre is integrated into the valve of each tyre. Each sensor unit can have, for example, a pressure sensor and/or a temperature sensor.

Each sensor unit further comprises a transmitter Tx adapted to transmit a signal indicating the values of the parameters measured by the respective sensor unit. The transmitter Tx, for example, can transmit a radiofrequency signal with a frequency of 433 MHz (complying with the European specifications) or with other frequencies permitted by the frequency control authorities, with frequency, width or phase modulation or with pulse transmission.

A receiver unit 2 that comprises a receiver Rx and an automatic direction finder (ADF) device or Doppler radiogoniometer 3 is installed in the vehicle, for example in the dashboard. The receiver unit 2 is connected to a CPU or on-board computer 5, which in turn is connected to a display 6.

The receiver Rx is coupled to the transmission frequency of the transmitters Tx so as to demodulate the signal transmitted by the transmitters and to send it to the computer 5 to display, by means of the display 6, the values of the tyre parameters.

The Doppler radiogoniometer 3 is adapted to identify the direction of transmission of the radiofrequency signal transmitted by the transmitters Tx and thus the position in the vehicle of the tyre which, by means of its sensor unit (1A, 1B, 1C, 1D), is transmitting to the receiver Rx. The radiogoniometer 3 sends this information to the computer 5 and accordingly, the position of the tyre is displayed on the display 6 with the measured values of the parameters thereof.

Furthermore, the computer 5 compares the measured values of the parameters with a pre-set range of threshold values. If the measured parameters fall outside the pre-set range, the computer 5 sends the driver a warning signal, indicating on the display 6 the exact position of the tyre which has shown running abnormalities.

Figure 2 shows a block diagram illustrating a possible circuit layout of the direction finder 3. The direction finder 3 comprises four antennae 30, of the dipole type, which are arranged at the corners of a square to be able to rotate electronically (not physically) around a central point P at a desired speed. That is to say, the antennae are powered sequentially with a pre-set clock cycle, simulating a physical rotation of the antennae.

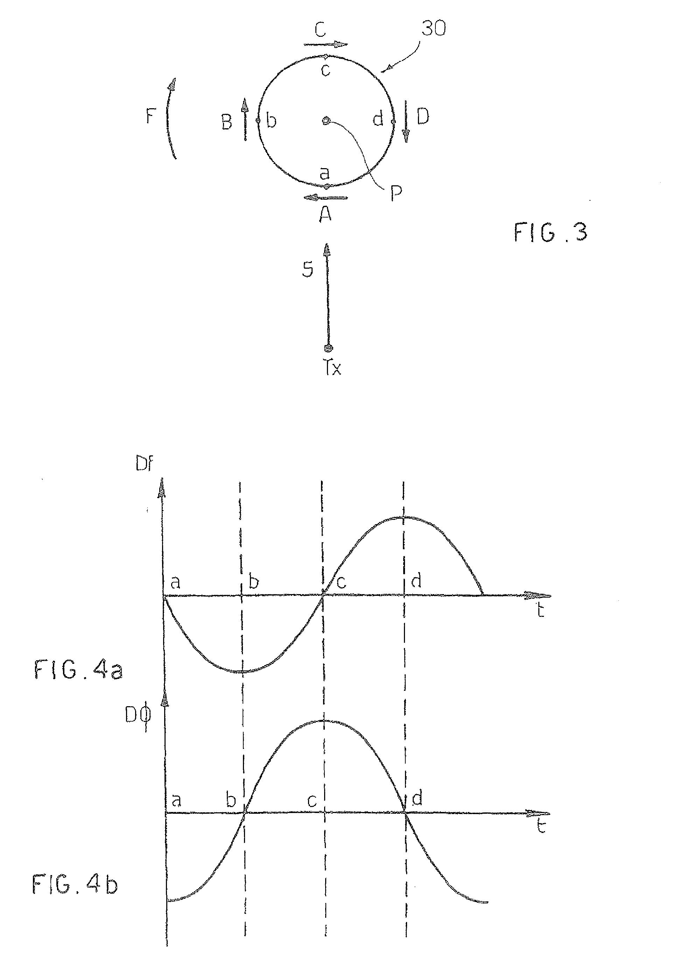

To explain the operation of the direction finder 3, reference is made to Figure 3, in which a radio transmission source Tx transmits a signal in the direction of the arrow S and the four antennae 30 are considered to turn physically around the point P.

As is known, there is a Doppler effect when there is a relative movement between the radio transmitter and the receiving antenna. The frequency of the received signal increases when the transmitter and the receiver move towards each other, whereas it decreases when they move away from each other.

When an antenna is in the initial position a, its instantaneous velocity component is in the direction of the arrow A at right angles to the signal transmission direction S; therefore, there is no Doppler effect.

If the antenna is turned 90° clockwise, it is in position b, in which its velocity component B is parallel to the direction S and the antenna moves away from the source; therefore, there is the maximum Doppler effect with a frequency decrease.

If the antenna is turned 180° with respect to the starting position a, the antenna is in the position c, in which its velocity component C is again at right angles to the direction of the source S; therefore, there is no Doppler effect.

Lastly, if the antenna is rotated 270° with respect to the starting position a, the antenna reaches the position d, in which its component of velocity D is parallel to the direction S of the source and the antenna moves close to the source; therefore, there is the maximum Doppler effect with a frequency increase.

Figure 4a shows a graph illustrating the change in frequency of the signal received as time passes. Figure 4b shows a graph illustrating the change in phase as time passes. It must be considered that the relationship between the changes in frequency and in phase is given by the following formula:

$$\frac{d}{dt}(\phi) = f \qquad \text{where f = frequency} \quad \text{and} \quad \phi = \text{phase}$$

Thus, by finding the true angular position of the point a, in which the Doppler effect component is null, it is possible to identify the exact angular position of the source Tx with respect to the central point P. In fact, the straight line joining the point P with a is directed exactly towards the source Tx.

The circuitry of the direction finder 3 of Figure 2 is designed to process the received signal in order to detect the point <u>a</u>.

The antennae 30 are connected to a band-pass filter 31 centred in the transmission band of the transmitters Tx to cut the frequency components outside a wanted band. An amplifier 32 connected to a variable resistor 33 is disposed at the outlet of the filter 31 so as to obtain an automatic gain control (AGC) circuit, adapted to keep the output in a linear range.

A mixer 34 mixes the signal coming from the ACG with a signal given out by a voltage oscillator 40 controlled by a crystal 4. The oscillator 40 gives out a voltage signal at a demodulation frequency, so that a base band signal that is filtered by a band-pass filter 35 leaves the outlet of the mixer 34.

The filtered signal is sent to a demodulator 36, is amplified by means of an amplifier 37 and the low frequencies are cut by means of a high-pass filter 38. The phase change signal $D\phi$ of Figure 4b is obtained at the outlet of the high-pass filter 38. The phase change signal $D\phi$ is then sent to a zero crossing detector (ZCD) circuit 39 which identifies the points <u>b</u> and <u>d</u> at which the signal crosses zero. Therefore, by subtracting or by adding 90° to the angular position previously detected for the points <u>b</u> and <u>d</u>, the exact angular direction of the point <u>a</u> and thus the angular direction of the transmitting source Tx is obtained.

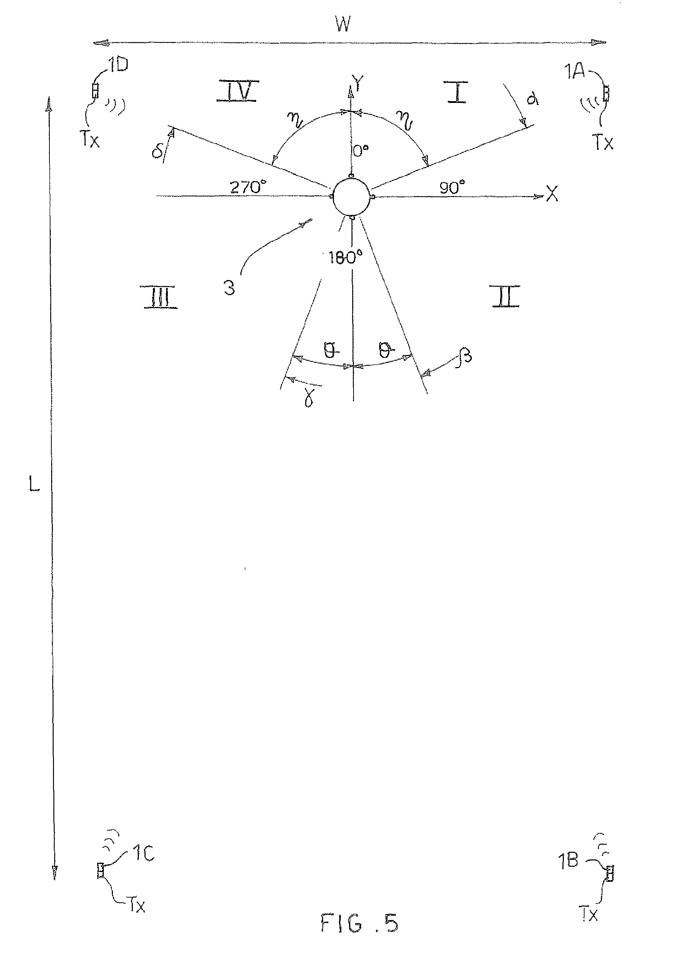

In Figure 5 the case in which the position finder 3 is disposed in a central position in the vehicle dashboard is considered. The distance between the front wheel sensors 1A and 1D is W = 2m, whereas the distance between the sensor 1D of the left front wheel and the sensor 1C of the left rear wheel is L = 3m.

A pair of Cartesian axes X-Y, along the crosswise and lengthwise directions of the vehicle, which originate at the central point P of the radiogoniometer, is considered. In this manner the plane of the Cartesian axes X-Y is divided into four quadrants I, II, III, IV.

In this case, the right front sensor 1A and the left front sensor 1D are situated at an angle η of about 69° with respect to the axis Y, whereas the left rear sensor 1C and the right rear sensor 1B are situated at an angle θ of about 21° with respect to the axis Y.

The Doppler radiogoniometer 3 is set so that 0° coincides with the Y axis. Considering a round angle of 360°, the sensor 1A is at an angle $\alpha = \eta = 69°$, the sensor 1B is at an angle $\beta = 180° - \theta = 159°$, the sensor 1C is at an angle $\gamma = 180 + \theta = 201°$ and the sensor 1D is at an angle $\delta = 360 - \eta = 291°$.

Thus if the radiogoniometer 3 detects:

- a source that is transmitting in a range around the angle $\alpha$ it identifies the sensor 1A, that is the right front wheel;
- a source that is transmitting in a range around the angle $\beta$ it identifies the sensor 1B, that is the right rear wheel;
- a source that is transmitting in a range around the angle $\gamma$ it identifies the sensor 1C, that is the left rear wheel;
- a source that is transmitting in a range around the angle $\delta$ it identifies the sensor 1D, that is the left front wheel.

As can be seen from Figure 5, the radiogoniometer 3 must be set with such a resolution as to ensure a detection error of less than 21° to avoid a possible error in the identification of the sensors 1C and 1B.

Numerous changes and modifications of detail within the reach of a person skilled in the art can be made to the present exemplifying embodiment of the invention without thereby departing from the scope of the invention as set forth in the appended claims.

## Claims

1.  A vehicle tyre condition monitoring system comprising:

    - a sensor unit (1A, 1B, 1C, 1D) mounted in each tyre of the vehicle and adapted to measure values of parameters indicating the condition of the tyre,
    - a transmitter (Tx) associated with each sensor unit to transmit signals indicating the parameters measured by the respective sensor unit,

    **characterised in that** it comprises:

    - a receiver unit (2) comprising a receiver (Rx) adapted to receive the signals transmitted by said transmitters (Tx) of the sensor units and an automatic direction finding device or Doppler radiogoniometer (3) adapted to detect the direction of the transmitter (Tx) transmitting the signal and thus the position in the vehicle of the tyre in which the transmitter transmitting the signal is mounted,
    - processing means (5) adapted to process the signals received by the receiver (2), and
    - display means (6) adapted to display the values of the tyre parameters measured by the sensor units and the relative position of the tyres.

2. A monitoring system according to claim 1, **characterised in that** said radiogoniometer (3) is disposed in a central position in the vehicle dashboard.

3. A monitoring system according to claim 1 or 2, **characterised in that** said radiogoniometer (3) comprises a set of antennae (30) that rotate electronically around a central point (P).

4. A monitoring system according to any one of the preceding claims, **characterised in that** said radiogoniometer (3) is disposed in such a way as to generate predetermined angles ($\alpha$, $\beta$, $\gamma$, $\delta$) with respect to the position of said transmitters (Tx) of the sensor units (1A, 1B, 1C, 1D).

5. A monitoring system according to any one of the preceding claims, **characterised in that** said radiogoniometer (3) has such a resolution as to ensure a detection error of less than 21°.

6. A monitoring system according to any one of the preceding claims, **characterised in that** said sensor unit comprises a pressure sensor and/or a temperature sensor adapted to measure the pressure and the temperature of the tyre.

7. A monitoring system according to any one of the preceding claims, **characterised in that** said transmitter (Tx) transmits a radiofrequency signal at a frequency of about 433 MHz or at other permitted frequencies.

8. A monitoring system according to any one of the preceding claims, **characterised in that** said processing means (5) compare the measured values of the parameters with preset threshold ranges and send a warning signal if the measured values of the parameters are outside the related preset threshold range.

9. A vehicle tyre condition monitoring method, comprising the following steps:

   - measurement of values of parameters which are indicative of the condition of the tyre,
   - transmission of signals which are indicative of the parameters measured in each tyre,
   - reception of the transmitted signals,
   - automatic detection of the direction of the transmitted signals by means of a Doppler radiogoniometer (3) to identify the position in the vehicle of the tyre from which the signals are transmitted,
   - processing of the received signals so as to obtain the values of the tyre parameters, and
   - display of the measured tyre parameters and of the relative position of the tyres.

10. A monitoring method according to claim 9, **characterised in that** it comprises the step of positioning the radiogoniometer (3) in a central position in the vehicle dashboard.

11. A monitoring method according to claim 9 or 10, **characterised in that** it provides for the electronic rotation of a set of antennae (30) around a central point (P) to find the direction of the transmitted signals.

12. A monitoring method according to any one of the claims from 9 to 11,
    **characterised in that** said radiogoniometer (3) is disposed in such a way as to generate predetermined angles ($\alpha$, $\beta$, $\gamma$, $\delta$) with respect to the transmission direction of the signals.

13. A monitoring method according to any one of the claims from 9 to 12,
    **characterised in that** it provides the steps of measuring the pressure and/or the temperature of the tyre.

14. A monitoring method according to any one of the claims from 9 to 13,
    **characterised in that** said signal is transmitted at radiofrequency, at a frequency of about 433 MHz or at other permitted frequencies.

15. A monitoring method according to any one of the claims from 9 to 14,
    **characterised in that** said processing step provides for the comparison of the measured values of the parameters with preset threshold ranges and for the sending of a warning signal if the measured values of the parameters are outside the relative preset threshold range.

FIG.1

FIG.2

FIG.3

FIG.4a

FIG.4b

FIG.5